# EUROPEAN PATENT SPECIFICATION

(11) **EP 1 016 789 B1**
(45) Date of publication and mention of the grant of the patent: **02.03.2005**
(21) Application number: 99125859.1
(22) Date of filing: 24.12.1999
(51) Int. Cl.: F04D 29/54, F04D 29/58, B60K 11/08

(54) **Upstream stator for cooling fan**
Stromaufwärts-Stator eines Gebläses
Stator en amont d' un ventilateur

(30) Priority: 30.12.1998 IT TO981100
(43) Date of publication of application: 05.07.2000
(73) Proprietor: FIAT AUTO S.p.A., 10135 Torino (IT)
(72) Inventor: Collinucci, Luigi, 10137 Torino (IT)
(74) Representative: Quinterno, Giuseppe

(56) References cited:
- DE-A- 4 424 881
- DE-A- 19 638 518
- US-A- 4 548 548
- US-A- 5 765 630

## Description

The present invention relates to a fan unit for the heat-exchange assembly of a motor vehicle (e.g. US-A-5 765 630).

The invention relates, more specifically, to a fan unit for the heat-exchange assembly of a motor vehicle, comprising at least one rotor which includes a set of main blades the chords of which are inclined to the axis of rotation of the rotor, the at least one rotor being disposed adjacent the front surface of the heat-exchange assembly.

In known fan units of the type specified above, between each pair of adjacent blades of the rotor or rotors, there is a space through which the cooling air can pass towards the heat-exchange assembly. This space is generally ample when its area perpendicular to the chords of the rotor blades is considered. However, when the motor vehicle is in operation, the air strikes the rotors in a direction generally parallel to the longitudinal axis of the motor vehicle, that is, substantially parallel to the axis of rotation of the rotor or rotors so that, as a first approximation, in the condition in which the motor vehicle is in motion and the rotor or rotors are stationary, the useful cross-section for the passage of the air through the rotors is constituted by the frontal area of the spaces between adjacent blades, that is, by the projection of the area of these spaces in a direction parallel to the axis of rotation of the rotor or rotors.

For this reason, and particularly for rotors having a relatively large number of blades, the total frontal area of the spaces between pairs of rotor blades which is useful for the passage of the air when the rotor or rotors are stationary is very small in comparison with the total area which is obtained by considering the same spaces in a direction perpendicular to the chords of the blades. In other words, the presence of the blades constitutes an obstacle to the air which reaches each rotor from the front and which has to pass through the rotor in order to reach the heat-exchange assembly. This obstacle causes a reduction in the flow-rate through the rotor or rotors, and hence a reduction in the cooling of the heat-exchange unit.

To overcome this problem, the subject of the invention is a fan unit of the type mentioned above, characterized in that it comprises a stator structure which includes a set of auxiliary blades separate from and disposed in front of the respective rotor with reference to the direction of the air-flow, the auxiliary blades being keyed in a manner such as to guide the air-flow towards the respective rotor in a direction substantially parallel to the chords of the main blades when the rotor is in the stationary condition.

By virtue of this concept, the air-flow which passes through the fan unit according to the invention can be increased considerably in comparison with that admitted through known units, since the air is deflected upstream of the rotor or rotors so that it can pass through them without being obstructed substantially by the presence of the rotor blades.

Further characteristics and advantages of the invention will become clearer from the following detailed description given with reference to the appended drawings, provided purely by way of non-limiting example in which:
Figure 1 is a front elevational view of a unit according to the invention, associated with a front cross-member of a motor vehicle and with a heat-exchange assembly,
Figure 2 is a schematic side elevational view, sectioned on the line II-II of Figure 1, showing the operating principle of the invention,
Figure 3 is a view similar to Figure 1, showing a first variant of the invention, and
Figure 4 is a view similar to Figure 3, showing another variant of the invention.

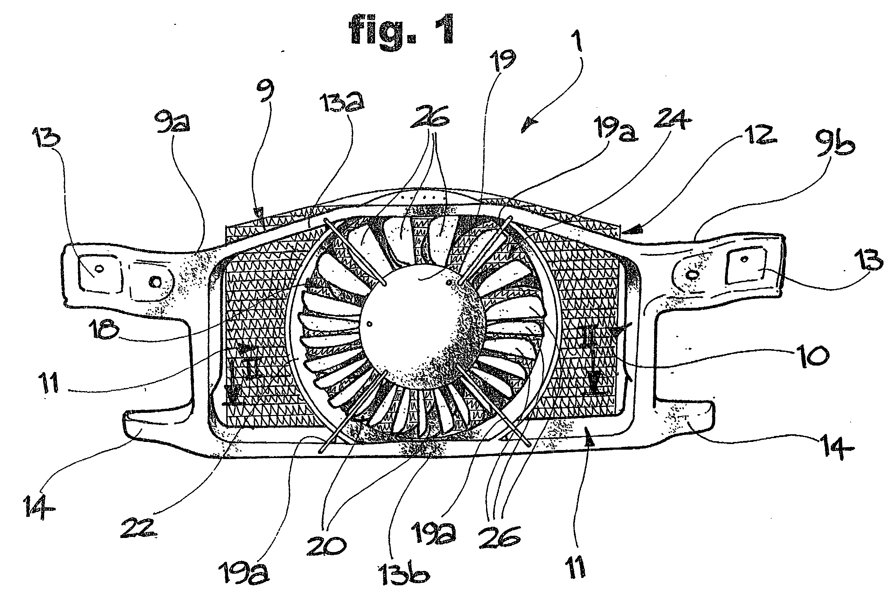

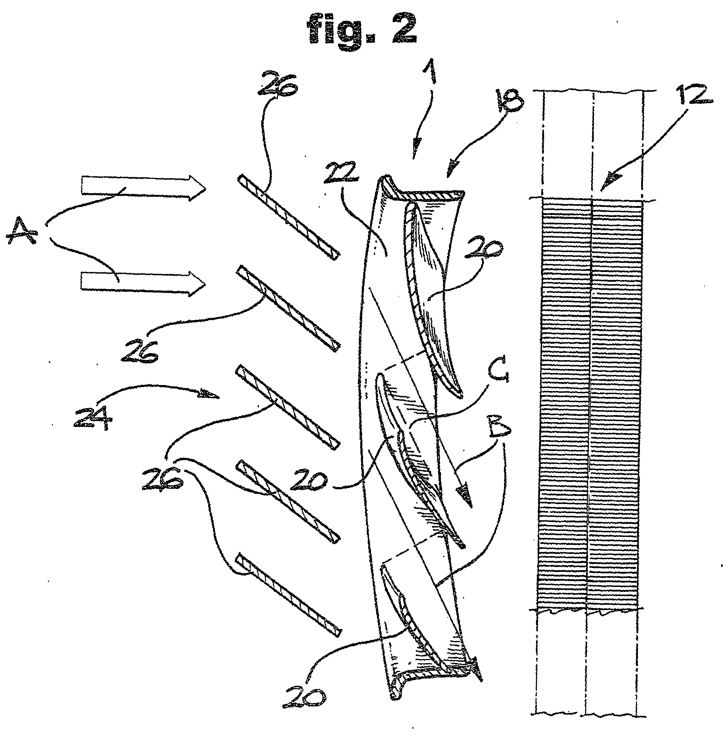

With reference initially to Figures 1 and 2, a fan unit for the heat-exchange assembly 12 of a motor vehicle is generally indicated 1 and includes, in general, the radiator for the engine coolant and possibly the condenser of the air-conditioning system and a radiator of the engine intercooler, arranged in a group or side by side.

The unit 1 in particular is housed in an opening 10 in a front cross-member 9 of the motor vehicle which preferably has the function of a fairing for directing the air towards the heat-exchange assembly 12. A cross-member of this type forms the subject of Italian patent application TO98A000704 in the name of the same Applicant and, in brief, comprises an integral structure having two symmetrically-opposed fork-shaped portions 9a, 9b each of which defines one half of the opening 10. The two arms of each portion 9a, 9b form two generally parallel branches 13a, 13b at the top and at the bottom, respectively.

Extending from the opposed ends of the upper branch 13a, to which the assembly 12 is also connected, are two lateral appendages 13 which can be used for fixing the cross-member 9 to the front ends of a pair of side members (not shown) of the motor-vehicle frame, and for the anchorage of a front bumper of the motor vehicle, and two curved flanges 14 project outwardly from the opposed ends of the lower branch 13b in order to support a base portion of the heat-exchange assembly 12.

The fan unit 1 comprises at least one rotor 18 disposed adjacent the front surface of the assembly 12. The rotor 18 has a set of blades 20 arranged in a ring and extending from a central hub 19 supported by support arms 19a fixed to the cross-member 9 by means of a tubular duct 22. According to a solution known in the art, in the region of the hub 19 there is an electric motor (not visible in Figure 1) for rotating the rotor 18. The tubular duct 22, which is supported by the cross-member 9, surrounds the rotor 18 coaxially and defines, together with the cross-member, a pair of dynamic air intakes 11 disposed at the sides of the rotor 1, inside the opening 10.

In particular, as shown more clearly in Figure 2, the blades 20 have their chords C, that is, the imaginary lines which join their leading edges to their trailing edges, inclined to the axis of rotation of the rotor 18.

According to the invention, in front of the rotor 18, there is a stator structure 24 which comprises a stationary set of auxiliary blades 26 arranged in a ring separate from and disposed in front of the blades 20 with reference to the direction of the air-flow which strikes the rotor when the motor vehicle is in motion. The blades 26 are keyed in a manner such as to deflect the air-flow A directed towards the rotor 18 so as to guide the air-flow in a manner such that it strikes the rotor, when the rotor is stationary, at an inclination substantially equal to that of the chords C of the blades 20, relative to the axis of rotation of the rotor 18. The air-flow B which passes through the rotor 18 is thus substantially parallel to the chords C of the blades 20 so that the blades 20 constitute only a minimal obstacle to the passage of the air for cooling the assembly 12 and therefore cause only a minimal reduction in the flow-rate through the stationary rotor 18.

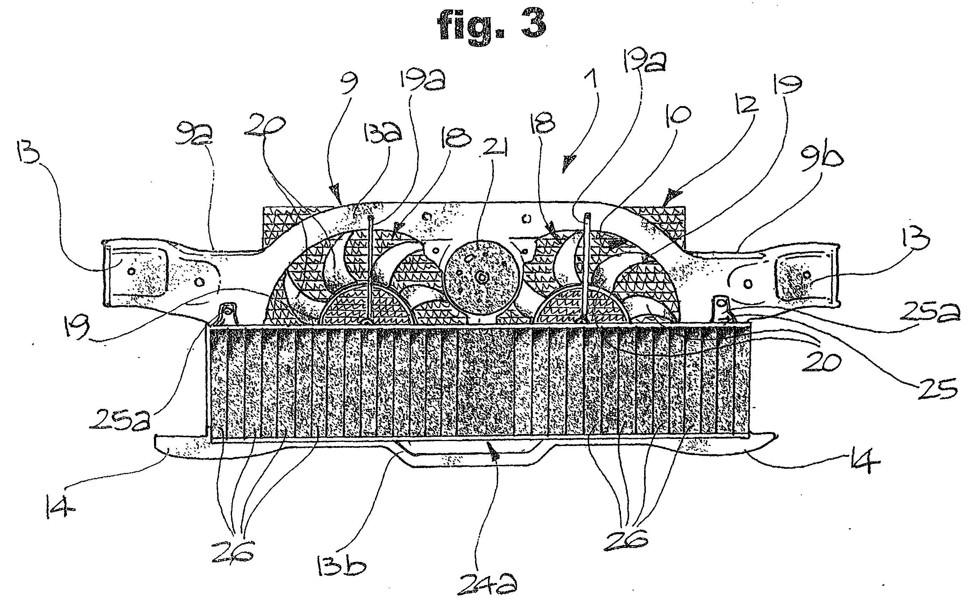

In Figure 3, in which the same reference numerals as in the previous drawings have been used to indicate identical or similar elements, the fan unit 1 comprises a pair of rotors 18 disposed side by side, for example, of the type described in Italian patent application TO98A000703 in the name of the same Applicant. The blades 20 of each rotor 18 extend from respective tubular hubs 19 which define a dynamic air intake and are connected rotatably to the cross-member 9 by means of a support structure having a plurality of arms 19a. In particular, both of the rotors 18 are driven by an electric motor 21 interposed between the rotors and supported by the upper branch 13a of the cross-member 9, the drive being transmitted by a transmission system which is not shown in detail in Figure 3 but which includes, for example, one or more transmission belts which engage a drive pulley of the motor 21 and at least one driven pulley of a respective rotor 18.

In this embodiment, the stator structure, indicated 24a, comprises a transverse plate 25 which is connected to the cross member 9 by means of fixing lugs 25a and to which a set of auxiliary blades 26 extending substantially parallel to one another in front of both rotors 18 is connected. In particular, the structure 24a is disposed in the region of the lower halves of the rotors 18 which, at least as a first approximation, are the portions which are most exposed to the dynamic air which strikes the motor vehicle when it is in motion. In fact, as stated above, the front bumper unit of the motor vehicle is connected to the front cross-member 9, and its main strong portion is disposed in front of the upper halves of the rotors 18, whereas its region which is disposed in front of the lower halves of the rotors 18, which is not usually responsible for absorbing impacts, normally has air-intakes so that the air can pass through them and strike the auxiliary sets of blades 24a dynamically.

The space defined between pairs of adjacent auxiliary blades 26 is preferably open towards the bottom so that any foreign bodies which might enter it can be expelled by gravity.

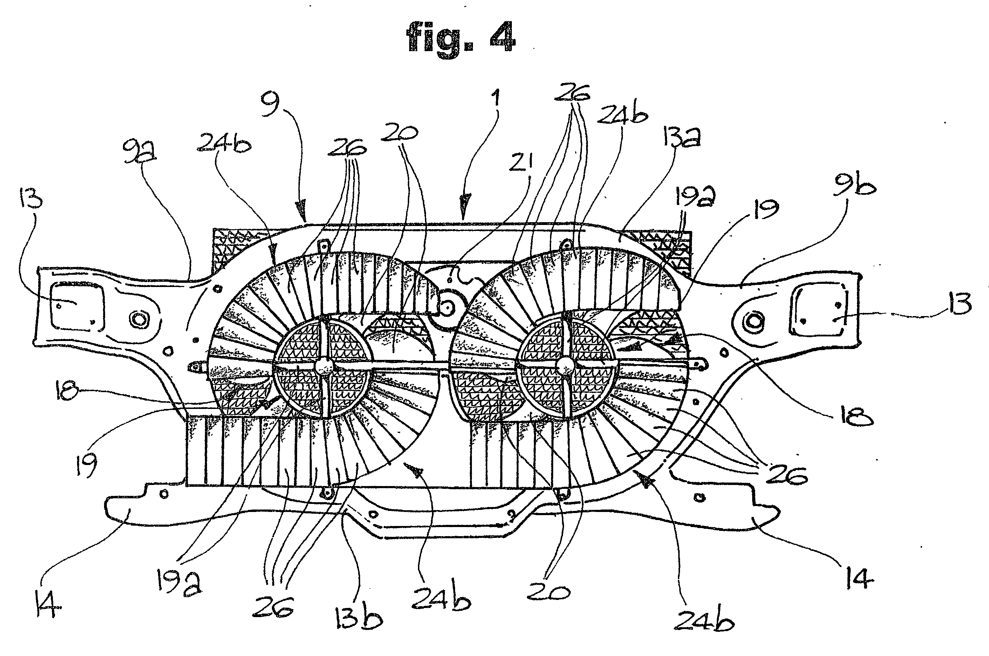

Figure 4, in which the same reference numerals as in Figure 3 indicate identical or similar elements, shows another variant of the invention. In this embodiment, the stator structure comprises four subsets of auxiliary blades 24b, each of which includes a set of blades 26 having at least one portion which is shaped as a sector of a ring and is disposed in front of a corresponding portion of a rotor 18, and from which a straight portion in which the auxiliary blades 26 are parallel to one another extends, so that each subset 24b is generally arcuate or J-shaped. Each subset 24b may be connected rigidly to the cross-member 9 independently of the others, or a pair of subsets 24b, for example, the two lower subsets and the two upper subsets, may form part of a single structure connected to the cross-member 9 by fixing means of known type. Naturally, only the lower subsets or only the upper subsets 24b may be present.

## Claims

1. A fan unit for the heat-exchange assembly of a motor vehicle, comprising at least one rotor (18) which includes a set of main blades (20) the chords (C) of which are inclined to the axis of rotation of the rotor (18), the at least one rotor (18) being disposed adjacent the front surface of the heat-exchange assembly (12),
**characterized in that** it comprises a stator structure (24; 24a; 24b) which includes a set of auxiliary blades (26) separate from and disposed in front of the respective rotor (18) with reference to the direction of the air-flow, the auxiliary blades (26) being keyed in a manner such as to guide the air-flow towards the respective rotor (18) in a direction substantially parallel to the chords (C) of the main blades (20) when the rotor is in the stationary condition.

2. A fan unit according to Claim 1, **characterized in that** the stator structure (24) comprises, for each rotor (18) a set of auxiliary blades (26) arranged in a ring and facing the set of main blades (20) of the respective rotor (18).

3. A fan unit according to Claim 1, **characterized in that** the stator structure (24b) comprises, for each rotor (18), at least one set of auxiliary blades (26) shaped substantially as a sector of a ring and facing the set of main blades (20) of the respective rotor (18) in a region of the front surface of the unit (1) which is struck dynamically by the air when the motor vehicle is in motion.

4. A fan unit according to Claim 1, **characterized in that** the stator structure (24a) comprises a single set of auxiliary blades (26) for all of the rotors (18) of the unit (1), the auxiliary blades (26) of the stator structure being arranged substantially parallel to one another so as to face the set of main blades (20) of the rotors (18) in a region of the front surface of the unit (1) which is struck dynamically by the air when the motor vehicle is in motion.

5. A fan unit according to Claim 3 or Claim 4, **characterized in that** the space defined between pairs of adjacent auxiliary blades (26) is open towards the bottom of the motor vehicle to allow any foreign bodies which have entered this space to be expelled by gravity.

6. A fan unit according to any one of Claims 2 to 5, **characterized in that** the stator structure (24; 24a; 24b) is anchored to a front cross-member (9) of the motor vehicle which defines a fairing for the at least one rotor (18).

## Patentansprüche

1. Gebläseeinheit für die Wärmetauscheranordnung eines Kraftfahrzeugs, umfassend zumindest einen Rotor (18), welcher einen Satz von Hauptblättern (20) umfasst, deren Sehnen (C) zur Rotationsachse des Rotors (18) geneigt sind, wobei der zumindest eine Rotor (18) angrenzend an die Stirnfläche der Wärmetauscheranordnung (12) angeordnet ist,
**dadurch gekennzeichnet, dass** sie eine Statorstruktur (24; 24a; 24b) umfasst, welche einen Satz von Hilfsblättern (26) umfasst, die vom jeweiligen Rotor (18) getrennt sind und bezüglich der Richtung des Luftstroms vor diesem angeordnet sind, wobei die Hilfsblätter (26) solcherart verkeilt sind, um den Luftstrom in einer Richtung, die zu den Sehnen (C) der Hauptblätter (20) im Wesentlichen parallel ist, zum jeweiligen Rotor (18) zu lenken, wenn sich der Rotor im stationären Zustand befindet.

2. Gebläseeinheit gemäß Anspruch 1, **dadurch gekennzeichnet, dass** die Statorstruktur (24) für jeden Rotor (18) einen Satz von Hilfsblättern (26) umfasst, welche in einem Ring angeordnet und dem Satz von Hauptblättern (20) des jeweiligen Rotors (18) zugewandt sind.

3. Gebläseeinheit gemäß Anspruch 1, **dadurch gekennzeichnet, dass** die Statorstruktur (24b) für jeden Rotor (18) zumindest einen Satz von Hilfsblättern (26) umfasst, welche im Wesentlichen als Kreisausschnitt geformt sind und dem Satz von Hauptblättern (20) des jeweiligen Rotors (18) in einem Bereich der Stirnfläche der Einheit (1), welcher bei Bewegung des Kraftfahrzeugs dynamisch von Luft getroffen wird, zugewandt sind.

4. Gebläseeinheit gemäß Anspruch 1, **dadurch gekennzeichnet, dass** die Statorstruktur (24a) für alle Rotoren (18) der Einheit (1) einen einzigen Satz von Hilfsblättern (26) umfasst, wobei die Hilfsblätter (26) der Statorstruktur im Wesentlichen parallel zueinander angeordnet sind, um dem Satz von Hauptblättem (20) der Rotoren (18) in einem Bereich der Stirnfläche der Einheit (1), welcher bei Bewegung des Kraftfahrzeugs dynamisch von Luft getroffen wird, zugewandt zu sein.

5. Gebläseeinheit gemäß Anspruch 3 oder Anspruch 4, **dadurch gekennzeichnet, dass** der zwischen Paaren von nebeneinanderliegenden Hilfsblättern (26) definierte Raum zum Boden des Kraftfahrzeugs hin offen ist, um zu ermöglichen, dass jedwede Fremdkörper, die in diesen Raum gedrungen sind, durch die Schwerkraft ausgestoßen werden.

6. Gebläseeinheit gemäß einem der Ansprüche 2 bis 5, **dadurch gekennzeichnet, dass** die Statorstruktur (24; 24a; 24b) an einem vorderen Querträger (9) des Kraftfahrzeugs verankert ist, welcher eine Verkleidung für den zumindest einen Rotor (18) definiert.

## Revendications

1. Unité de ventilateur pour l'ensemble d'échange de chaleur d'un véhicule à moteur, comportant au moins un rotor (18) qui comprend un ensemble de pales principales (20) dont les cordes (C) sont inclinées vers l'axe de rotation du rotor (18), le au moins un rotor (18) étant disposé de façon adjacente à la surface avant de l'ensemble d'échange de chaleur (12),
**caractérisée en ce qu'**elle comporte une structure de stator (24; 24a; 24b) qui comprend un ensemble de pales auxiliaires (26) séparées de et disposées en avant du rotor (18) respectif en se référant à la direction de l'écoulement d'air, les pales auxiliaires (26) étant calées de manière à guider l'écoulement d'air vers le rotor (18) respectif dans une direction sensiblement parallèle aux cordes (C) des pales principales (20) lorsque le rotor est dans la condition fixe.

2. Unité de ventilateur selon la revendication 1, **caractérisée en ce que** la structure de stator (24) comprend, pour chaque rotor (18), un ensemble de pales auxiliaires (26) disposé en anneau et face à l'ensemble de pales principales (20) du rotor (18) respectif.

3. Unité de ventilateur selon la revendication 1, **caractérisée en ce que** la structure de stator (24b) comprend, pour chaque rotor (18), au moins un ensemble de pales auxiliaires (26) sensiblement sous la forme d'un secteur d'anneau et face à l'ensemble de pales principales (20) du rotor (18) respectif dans une zone de la surface avant de l'unité (1) qui est frappée de manière dynamique par l'air lorsque le véhicule à moteur est en mouvement.

4. Unité de ventilateur selon la revendication 1, **caractérisée en ce que** la structure de stator (24a) comprend un unique ensemble de pales auxiliaires (26) pour tous les rotors (18) de l'unité (1), les pales auxiliaires (26) de la structure de stator étant disposées sensiblement en parallèle l'une à l'autre de façon à faire face à l'ensemble de pales principales (20) des rotors (18) dans une zone de la surface avant de l'unité (1) qui est frappée de manière dynamique par l'air lorsque le véhicule à moteur est en mouvement.

5. Unité de ventilateur selon la revendication 3 ou la revendication 4, **caractérisée en ce que** la forme définie entre des paires de pales auxiliaires (26) adjacentes est ouverte vers le fond du véhicule à moteur afin de permettre à des corps étrangers quelconques qui sont entrés dans cet espace d'être expulsés par la gravité.

6. Unité de ventilateur selon l'une quelconque des revendications 2 à 5, **caractérisée en ce que** la structure de stator (24; 24a; 24b) est ancrée sur une traverse avant (9) du véhicule à moteur qui définit un capotage pour le au moins un rotor (18).
